# EUROPÄISCHE PATENTANMELDUNG

(11) **EP 4 462 732 A1**
(43) Veröffentlichungstag der Anmeldung: **13.11.2024**
(21) Anmeldenummer: 23172767.8
(22) Anmeldetag: 11.05.2023
(51) Int. Cl.: H04L 9/40, G06F 21/57

(54) **COMPUTER-IMPLEMENTIERTES VERFAHREN, COMPUTERPROGRAMMPRODUKT UND KOMMUNIKATIONSSYSTEM ZUM VERARBEITEN VON DATEN**

(71) Anmelder: Siemens Aktiengesellschaft, 80333 München (DE)
(72) Erfinder: Aschauer, Hans, 81829 München (DE); Becker, Stefan, 91325 Adelsdorf (DE); Falk, Rainer, 85435 Erding (DE); Feist, Christian Peter, 80689 München (DE); Laurig, Frank, 92369 Sengenthal (DE); Palmin, Anna, 76187 Karlsruhe (DE)
(74) Vertreter: Siemens Patent Attorneys

(57) **Zusammenfassung**

Es wird ein computer-implementiertes Verfahren zum Verarbeiten von Daten in einem Kommunikationssystem, welches ein Gerät, eine Registrierungsstelle und eine Zertifizierungsstelle aufweist, vorgeschlagen. Das Verfahren weist die Schritte auf:
a) Anfordern eines digitalen Zertifikats für das Gerät mittels einer Zertifikatssignierungsanforderung,
b) Bereitstellen, in Abhängigkeit des Anforderns, von für das Gerät spezifischen Geräteattributen,
c) Durchführen einer Prüfung der Zertifikatssignierungsanforderung des Geräts,
d) Einkodieren, durch die Registrierungsstelle, der spezifischen Geräteattribute in das angeforderte digitale Zertifikat zum Erhalten eines digitalen Gerätezertifikats aufweisend die spezifischen Geräteattribute,
e) Durchführen, wenn die Prüfung erfolgreich ist, durch die Zertifizierungsstelle, eines Signierens des digitalen Gerätezertifikats mit dem privaten Schlüssel der Zertifizierungsstelle zum Ausstellen eines signierten digitalen Gerätezertifikats,
f) Bereitstellen des ausgestellten signierten digitalen Gerätezertifikats an das Gerät, und
g) Durchführen eines Zugriffsschemas zum Zugriff auf eine Ressource durch das Gerät in Abhängigkeit des ausgestellten signierten digitalen Gerätezertifikats.

## Beschreibung

Die vorliegende Erfindung betrifft ein computer-implementiertes Verfahren, ein Computerprogrammprodukt sowie ein Kommunikationssystem zum Verarbeiten von Daten.

Bei einer "Zero-Trust"-Zugriffskontrolle wird üblicherweise nicht nur der zugreifende Benutzer authentisiert, sondern es werden weitere Kriterien abgeprüft und bei einer Zugriffskontrollentscheidung verwendet. Beispielsweise kann bei einem Zugriff überprüft werden, ob das Gerät ein firmenadministriertes Gerät ist oder ob das Gerät einen aktuellen Patch-Status aufweist. Dies bedeutet aber, dass diese Information wiederholt bei Zugriffen bzw. bei der Authentisierung gegenüber einem Identity and Access Management-Server (IAM-Server) ermittelt und überprüft wird. Dadurch kommt es zu wiederholten Überprüfungen und dabei auch zu einer relativ häufigen Ermittlung und Übertragung von Informationen, die für eine Zugriffskontrollentscheidung benötigt werden.

Üblicherweise authentisiert sich ein Benutzer mittels eines Passworts, eines Authentisierungstokens oder eines digitalen Zertifikats gegenüber einem IAM-Zugriffskontrollsystem. In der NIST SP800-207 "Zero Trust Architecture" [1] wird allgemein das Zero-Trust-Konzept beschrieben, bei der in Abschnitt 2.1 die Verwendung von dynamischen Zugriffskontrollpolitiken beschrieben wird: "4. *Access to resources is determined by dynamic policy including the observable state of dient identity, application*/*service, and the requesting asset and may include other behavioral and environmental attributes."*

Ferner ist es aus dem Stand der Technik bekannt, dass in ein Authentisierungszertifikat nach dem X.509-Standard neben der Identifizierungsinformation auch eine Berechtigungsinformation einkodiert sein kann. Dazu wird in das Authentisierungszertifikat eine Information zur gewährten Rolle und zum Umfang, in dem die Rolle ausgeübt werden darf, einkodiert (siehe auch [2], Abschnitt III.F).

Weiterhin sind Attributzertifikate bekannt, die auch Autorisierungszertifikate genannt werden [3].

Vor diesem Hintergrund besteht eine Aufgabe der vorliegenden Erfindung darin, einen Zugriff auf eine Ressource zu verbessern.

Gemäß einem ersten Aspekt wird ein computer-implementiertes Verfahren zum Verarbeiten von Daten in einem Kommunikationssystem, welches ein Gerät, eine Registrierungsstelle und eine Zertifizierungsstelle aufweist, vorgeschlagen. Das Verfahren weist die Schritte auf:
a) Anfordern eines digitalen Zertifikats für das Gerät mittels einer Zertifikatssignierungsanforderung,
b) Bereitstellen, in Abhängigkeit des Anforderns, von für das Gerät spezifischen Geräteattributen,
c) Durchführen, durch die Registrierungsstelle, einer Prüfung der Zertifikatssignierungsanforderung des Geräts,
d) Einkodieren, durch die Registrierungsstelle, der spezifischen Geräteattribute in das angeforderte digitale Zertifikat zum Erhalten eines digitalen Gerätezertifikats aufweisend die spezifischen Geräteattribute,
e) Durchführen, wenn die Prüfung erfolgreich ist, durch die Zertifizierungsstelle, eines Signierens des digitalen Gerätezertifikats mit dem privaten Schlüssel der Zertifizierungsstelle zum Ausstellen eines signierten digitalen Gerätezertifikats,
f) Bereitstellen des ausgestellten signierten digitalen Gerätezertifikats an das Gerät, und
g) Durchführen eines Zugriffsschemas zum Zugriff auf eine Ressource durch das Gerät in Abhängigkeit des ausgestellten signierten digitalen Gerätezertifikats.

Durch Verwendung des computer-implementierten Verfahrens gemäß dem ersten Aspekt wird eine Zugriffskontrolle auf eine Ressource durch Einkodieren von spezifischen Geräteattributen in ein digitales Zertifikat verbessert.

Das computer-implementierte Verfahren gemäß dem ersten Aspekt ermöglicht es, beim Ausstellen des digitalen Zertifikats für das Gerät spezifische Geräteattribute in das digitale Zertifikat einzukodieren, wodurch ein digitales Gerätezertifikat erhalten wird. Anschließend wird das erhaltene digitale Gerätezertifikat signiert, um ein signiertes digitales Gerätezertifikat auszustellen. Dies führt dazu, dass in dem ausgestellten signierten digitalen Gerätezertifikat eine Information (die spezifischen Geräteattribute) enthalten ist, welche spezifischen Geräteattribute (Zero-Trust-Attribute) bereits bei der Ausstellung des signierten digitalen Gerätezertifikats ermittelt wurden.

Dies hat den technischen Effekt, dass bei einem Zugriff oder einer Authentisierung des Geräts auf die Ressource allein durch das verwendete signierte digitale Gerätezertifikat eine Zusatzinformation vorliegt, die für eine Zero-Trust-Zugriffskontrollentscheidung benötigt wird. Dadurch müssen die spezifischen Geräteattribute bei einer Authentisierung oder bei einem Zugriff auf die Ressource nicht erneut ermittelt werden. Durch das verwendete signierte digitale Gerätezertifikat wird einem Kommunikationspartner somit eine Information bereitgestellt, welche Zero-Trust-Attribute bereits beim Ausstellen des signierten digitalen Gerätezertifikats ermittelt wurden und welche Zero-Trust-Attribut-Werte bereits inhaltlich überprüft sind.

Dies hat den Vorteil, dass bei der Zugriffskontrollentscheidung die spezifischen Geräteattribute nicht mehr ermittelt werden müssen, was wiederrum den Rechenaufwand bei jedem Zugriff auf die Ressource reduziert und damit Rechenressourcen einspart. Infolgedessen werden die zur Zugriffsprüfung verwendeten spezifischen Geräteattribute effizienter ermittelt. Ein weiterer Vorteil ist, dass das computer-implementierte Verfahren gemäß dem ersten Aspekt eine einfache Zero-Trust-Migration für Legacy-Kommunikationsprotokolle ermöglicht, die zwar eine zertifikats-basierte Authentisierung unterstützen, aber keine darüberhinausgehende, eigenständige Zero-Trust-Prüfung. Dadurch kann insbesondere in Industrieumgebungen mit etablierten OT-Kommunikationsprotokollen (engl. "Operational Technology"), die über IPsec (engl. "Internet Protocol Security") oder TLS/DTLS (engl. "Transport Layer Security"/"Datagram Transport Layer Security") geschützt sind, ohne Änderung des Kommunikationsprotokolls selbst eine Zero-Trust-Funktionalität nachgerüstet werden.

Darüber hinaus ist ein weiterer Vorteil, dass bei einem Offline-Kommunikationsszenario, z.B. bei einem lokalen Remote-Service-Zugang zu einem Steuergerät (zu der Ressource) ähnlich wie bei der Norm IEC62351-8 dem Steuergerät eine Zero-Trust-Information, die sich auf den Zugreifenden bzw. auf das für den Zugriff verwendete Gerät bezieht, über das verwendete signierte digitale Gerätezertifikat bereitgestellt werden kann.

Ein computer-implementiertes Verfahren ist insbesondere ein Verfahren, bei dem ein Computer, ein Computernetz oder ein anderes programmierbares Gerät verwendet wird und bei dem ein oder mehrere Merkmale ganz oder teilweise mit Hilfe eines Computerprogramms realisiert werden.

Das Gerät ist beispielsweise ein IoT-Gerät (engl. Internetof-Things), insbesondere ein industrielles IoT-Gerät, ein Steuergerät, eine speicherprogrammierbare Steuerung, eine Werkzeugmaschine, eine Produktionsmaschine, ein Roboter, ein 3D-Drucker für eine additive Fertigung, ein Remote-Ein-/Ausgabe-Modul (Remote IO-Modul) zum dezentralen Anbinden von Sensoren und Aktoren, ein IoT-Gateway oder ein Netzwerkgerät eines industriellen Kommunikationsnetzes.

Die Registrierungsstelle ist eine Instanz innerhalb einer Public-Key-Infrastruktur und dient als Registrierungsbehörde für digitale Zertifikate.

Die Zertifizierungsstelle ist in der Informationssicherheit eine Organisation, die digitale Zertifikate herausgibt. Ein digitales Zertifikat dient dazu, einen bestimmten öffentlichen Schlüssel einer Person oder Organisation zuzuordnen. Diese Zuordnung wird von der Zertifizierungsstelle beglaubigt, indem sie sie mit ihrer eigenen digitalen Unterschrift versieht.

Das digitale Zertifikat ist insbesondere ein Authentisierungszertifikat, vorzugsweise ein X.509-Standard-Zertifikat. In dem ausgestellten signierten digitalen Gerätezertifikat ist zumindest eine Information zum Zero-Trust-Status des Geräts an sich enthalten.

Insbesondere kann das Anfordern, vorzugsweise durch das Gerät, gemäß Schritt a) zu einem bestimmten Zeitpunkt unabhängig von dem Durchführen des Zugriffsschemas durchgeführt werden.

Die Zertifikatssignierungsanforderung ist ein digitaler Antrag, für einen öffentlichen Schlüssel und der Identitäts-Information des Antragstellers ein mittels einer digitalen Signatur geschütztes digitales Identitäts-Zertifikat (auch Public-Key-Zertifikat genannt) zu erstellen. Insbesondere weist die Zertifikatssignierungsanforderung die Identität des Antragstellers, insbesondere des Geräts, und den öffentlichen Schlüssel des Antragstellers auf.

Bevorzugt prüft die Registrierungsstelle die Identität und den öffentlichen Schlüssel des Geräts bei der Prüfung der Zertifikatssignierungsanforderung. Vorzugsweise weist das Signieren ein Anwenden des privaten Schlüssels der Zertifizierungsstelle auf einen Hashwert des digitalen Gerätezertifikats, welcher mittels einer Hashfunktion gebildet wird, auf.

Das ausgestellte signierte digitale Gerätezertifikat kann auch als ein Zero-Trust-Zertifikat bezeichnet werden.

Gemäß einer Ausführungsform weist das Bereitstellen gemäß Schritt b) ferner auf:
Durchführen eines Gerätescans mittels einer Scan-Einheit zum Ermitteln der spezifischen Geräteattribute.

Der Gerätescan kann auch als ein "Active Attribute Discovery" bezeichnet werden.

Gemäß einer weiteren Ausführungsform weist das Durchführen des Gerätescans einen Netzwerk-Scan des Geräts, eine Abfrage der spezifischen Geräteattribute über eine Open Platform Communications Unified Architecture oder ein Simple Network Management Protocol und/oder eine Abfrage von einem Gerätemanagementsystem, in welchem die spezifischen Geräteattribute für das Gerät gespeichert sind, auf.

Gemäß einer weiteren Ausführungsform weist das Bereitstellen gemäß Schritt b) auf:
Übermitteln, in Abhängigkeit des Anforderns und gemeinsam mit der Zertifikatssignierungsanforderung, der spezifischen Geräteattribute zumindest an die Registrierungsstelle.

Bei dieser Ausführungsform wird kein Geräte-Scan durchgeführt. Hierbei werden die spezifischen Geräteattribute gemeinsam mit der Zertifikatssignierungsanforderung übermittelt. Die spezifischen Geräteattribute können dabei in Form einer kryptographisch mittels eines Attestierungsschlüssels geschützten Attestierung gemeinsam mit der Zertifikatssignierungsanforderung übermittelt werden. Die Zertifikatssignierungsanforderung kann mittels eines Zertifikatsanforderungsschlüssels, der unterschiedlich zum Attestierungsschlüssel ausgebildet ist, geschützt übermittelt werden.

Gemäß einer weiteren Ausführungsform weisen die spezifischen Geräteattribute erste Zero-Trust-Attribute auf, wobei das Durchführen gemäß Schritt e) ferner aufweist:
Überprüfen, durch die Registrierungsstelle, einer Zulässigkeit eines bestimmten Werts eines der ersten Zero-Trust-Attribute.

Insbesondere wird in dem Schritt e), also bereits bei dem Ausstellen, anhand der in den spezifischen Geräteattributen enthaltenen ersten Zero-Trust-Attribute durch die Registrierungsstelle überprüft, ob der bestimmte Wert eines ersten Zero-Trust-Attributs zulässig ist. Ein spezifisches Geräteattribut kann auch als ein Zero-Trust-Attribut, insbesondere als ein erstes Zero-Trust-Attribut, bezeichnet werden. Die Registrierungsstelle kann die Überprüfung eigenständig durchführen oder zur Überprüfung der Zulässigkeit des ersten Zero-Trusts-Attributs ein weiteres System, insbesondere ein Geräteverwaltungssystem (engl. device management system) oder ein Geräteverzeichnissystem (engl. device directory system) abfragen.

Gemäß einer weiteren Ausführungsform weisen die spezifischen Geräteattribute erste Informationen, die angeben, ob eine Gerätekonfigurations-Compliance-Prüfung beim Ausstellen des signierten digitalen Gerätezertifikats gemäß Schritt e) erfolgt ist, zweite Informationen, die angeben, welche spezifischen Geräteattribute beim Ausstellen des signierten digitalen Gerätezertifikats gemäß Schritt e) überprüft wurden, und/oder dritte Informationen auf, die Information zu ermittelten Attributwerten der spezifischen Geräteattribute angeben.

Ob eine Gerätekonfigurations-Compliance-Prüfung beim Ausstellen des signierten digitalen Gerätezertifikats gemäß Schritt e) erfolgt ist, bedeutet insbesondere, ob das Gerät die definierten Firmen-Compliance-Vorgaben erfüllt, also beispielsweise ob es Enterprise-managed ist, ob der Patch-Status aktuell ist und/oder ob der Virus-Scanner aktiv und mit dem aktuellen Virus-Pattern ausgestattet ist.

Die zweiten Informationen geben insbesondere an, welche spezifischen Geräteattribute beim Ausstellen des signierten digitalen Gerätezertifikats gemäß Schritt e) überprüft wurden, also beispielsweise, ob das spezifische Geräteattribut "Enterprise-managed", das spezifische Geräteattribut "Patch-Status aktuell" und/oder das spezifische Geräteattribut "Virus-Scanner aktiv" überprüft wurde.

Die dritten Informationen geben vorzugsweise an, welchen Status ein Flag aufweist, welches aussagt, ob das Gerät Enterprise-managed ist und ggf. in welcher Gerätemanagement-Domäne es sich befindet. Die dritten Informationen können ferner bestimmte Werte zu spezifischen Geräteattributen angeben, beispielsweise den Wert oder die Version des ermittelten Patch-Status und/oder die ermittelte Version der Virus-Pattern.

Gemäß einer weiteren Ausführungsform weist das ausgestellte signierte digitale Gerätezertifikat eine bestimmte Gültigkeitsdauer, vorzugsweise von einem Tag, mehreren Tagen oder einer Woche, auf.

Die bestimmte Gültigkeitsdauer ist insbesondere so kurz gewählt, da sich ein Zero-Trust-Attribut oder eine Zero-Trust-Information ändern kann, und damit vorteilhafterweise die Gültigkeit des Zero-Trust-Attributs regelmäßig erneut wird.

Gemäß einer weiteren Ausführungsform weist das ausgestellte signierte digitale Gerätezertifikat eine Zertifikatserweiterung auf, wobei die Zertifikatserweiterung in einem ersten Erweiterungsfeld einen Verweis auf zumindest ein Attribut-Zertifikat, in welchem zusätzliche für das Gerät spezifische Geräteattribute gesichert gespeichert sind, aufweist.

Eine Zertifikatserweiterung ist insbesondere ein Informationsfeld, welches zusätzliche Informationen zu Zertifikaten bereitstellen kann. Eine Zertifikatserweiterung bietet eine Möglichkeit zur Erweiterung der ursprünglichen X.509-Standards für Zertifikatsinformationen.

Gemäß einer weiteren Ausführungsform weist das ausgestellte signierte digitale Gerätezertifikat eine weitere Zertifikatserweiterung auf, wobei die weitere Zertifikatserweiterung in einem zweiten Erweiterungsfeld eine Root-of-Trust für zumindest ein weiteres Attribut-Zertifikat aufweist, wobei die Root-of-Trust den öffentlichen Schlüssel der Zertifizierungsstelle aufweist.

Mittels der Root-of-Trust in der weiteren Zertifikatserweiterung kann in vorteilhafter Weise die Gültigkeit der Bestätigung des/der Zero-Trust Attributs/Attribute innerhalb der spezifischen Geräteattribute unmittelbar erfolgen.

Dadurch ergibt sich ein Vorteil dieser Ausführungsform, nämlich dass die Gültigkeitsdauer des Attribut-Zertifikats, beispielsweise einen Tag, deutlich kürzer sein kann als die eines Authentisierungszertifikats, welches eine relative lange Gültigkeitsdauer, beispielsweise 1 oder 2 Jahre, aufweist. Ein weiterer Vorteil besteht darin, dass das Attribut-Zertifikat von einer anderen Stelle ausgestellt werden kann als das Authentisierungszertifikat (digitales Zertifikat), wodurch eine organisatorische Trennung der Verantwortlichkeiten erleichtert wird.

Der im ausgestellten signierten digitalen Gerätezertifikat enthaltene Verweis in der weiteren Zertifikatserweiterung bezieht sich hierbei insbesondere nicht auf ein konkretes Zertifikat, wie beispielsweise auf die Seriennummer und den Aussteller, sondern auf einen symbolischen Namen, der die im Attribut-Zertifikat enthaltenen Attribute beschreibt.

Zusätzlich hat diese Ausführungsform noch einen weiteren Vorteil in Bezug auf den Stand der Technik. Gemäß dieser Ausführungsform verweist das ausgestellte signierte digitale Gerätezertifikat, beispielsweise ein Authentisierungszertifikat, auf ein oder mehrere Attribut-Zertifikate. Wohingegen im Stand der Technik umgekehrt nur das Attribut-Zertifikat auf das Authentisierungszertifikat, bzw. den "Eigentümer" des Zertifikats, der im Common Name (CN) des Zertifikats genannt wird, verweist.

Der öffentliche Schlüssel und der private Schlüssel sind kryptographische Schlüssel, welche innerhalb einer Public-Key-Infrastruktur verwendet werden.

Eine Root-of-Trust wird insbesondere als ein Vertrauensanker bezeichnet und wird von einer Stammzertifizierungsinstanz (Root-CA) ausgestellt. Mittels der Stammzertifizierungsinstanz kann die gesamte Zertifikatskette von der Stammzertifizierungsinstanz bis hin zu einzelnen innerhalb einer PKI ausgestellten digitalen Zertifikaten nachvollziehbar überprüft werden.

Gemäß einer weiteren Ausführungsform weist das Kommunikationssystem ferner eine Zugriffskontrollvorrichtung auf, wobei die Zugriffskontrollvorrichtung einen Sicherheitsregelentscheidungspunkt und einen Sicherheitsregelumsetzungspunkt aufweist, wobei das Durchführen des Zugriffsschemas gemäß Schritt g) ferner die Schritte aufweist:
g1) Anfragen, durch das Gerät, einer Erlaubnis zum Zugriff auf die Ressource durch das Gerät,
g2) Überprüfen der Erlaubnis durch den Sicherheitsregelentscheidungspunkt durch Anwenden von vordefinierten Zugriffsregeln auf die spezifischen Geräteattribute des ausgestellten signierten digitalen Gerätezertifikats zum Erhalten eines ersten Zugriffsergebnisses,
g3) wenn das erste Zugriffsergebnis positiv ist, Zulassen des Zugriffs von dem Gerät auf die Ressource durch den Sicherheitsregelumsetzungspunkt, oder
   wenn das erste Zugriffsergebnis negativ ist, Verhindern des Zugriffs von dem Gerät auf die Ressource durch den Sicherheitsregelumsetzungspunkt.

Eine Zugriffskontrollvorrichtung ist insbesondere eine Vorrichtung, welche festlegt, welches Gerät und wann ein Gerät Zugriff auf eine Ressource haben darf oder nicht.

Der Sicherheitsregelentscheidungspunkt ist insbesondere ein PDP (engl. "Policy Decision Point"). Der PDP ist eine Instanz, in welcher Policy-Entscheidungen getroffen werden.

Der Sicherheitsregelumsetzungspunkt ist insbesondere ein PEP (engl. "Policy Enforcement Point"). Der PEP ist eine Instanz, welche die Implementierung zur Umsetzung der vom PDP getroffenen Policy-Entscheidungen aufweist.

Die vordefinierten Zugriffsregeln sind Regeln, anhand derer der Zugriff auf die Ressource entschieden wird.

Gemäß einer weiteren Ausführungsform weist das Verfahren nach dem Überprüfen gemäß Schritt g2) ferner die Schritte auf:
h) erneutes Überprüfen, bei einem sicherheitskritischen Zugriff durch das Gerät auf die Ressource oder bei einer Authentisierung des Geräts bei der Zugriffskontrollvorrichtung, der Erlaubnis zum Zugriff auf die Ressource durch das Gerät durch den Sicherheitsregelentscheidungspunkt durch Anwenden der vordefinierten Zugriffsregeln auf die spezifischen Geräteattribute des ausgestellten signierten digitalen Gerätezertifikats zum Erhalten eines zweiten Zugriffsergebnisses,
i) erneutes Bereitstellen, bei einem sicherheitskritischen Zugriff durch das Gerät auf die Ressource oder bei einer Authentisierung des Geräts bei der Zugriffskontrollvorrichtung, der bereitgestellten spezifischen Geräteattribute, und/oder
j) erneutes Überprüfen, bei dem sicherheitskritischen Zugriff durch das Gerät auf die Ressource oder bei der Authentisierung des Geräts bei der Zugriffskontrollvorrichtung, der Erlaubnis zum Zugriff auf die Ressource durch das Gerät durch den Sicherheitsregelentscheidungspunkt durch Anwenden der vordefinierten Zugriffsregeln auf die erneut bereitgestellten spezifischen Geräteattribute des ausgestellten signierten digitalen Gerätezertifikats zum Erhalten eines dritten Zugriffsergebnisses.

Dies ermöglicht in vorteilhafter Weise eine zweistufige Ermittlung von Zero-Trust-Attributwerten in den spezifischen Geräteattributen:
Einige Zero-Trust-Attributwerte in den spezifischen Geräteattributen, wie beispielsweise die ersten Zero-Trust-Attribute, werden bereits beim Ausstellen des signierten digitalen Gerätezertifikats gemäß Schritt e) ermittelt und im signierten digitalen Gerätezertifikat gespeichert (erste Stufe der Ermittlung).

Andere Zero-Trust-Attributwerte, wie beispielsweise zweite Zero-Trust-Attribute, werden erst bei einer Authentisierung des Geräts oder einem Zugriff des Geräts bei der Zugriffskontrollvorrichtung ermittelt (zweite Stufe der Ermittlung).

Dies ermöglicht in vorteilhafter Weise weiterhin eine zweistufige Ermittlung von Zero-Trust-Attributwerten in den spezifischen Geräteattributen:
Insbesondere können die Schritte h), i) und/oder j) auch zu einem zufälligen Zeitpunkt, beispielsweise stichprobenartig durchgeführt werden.

Gemäß einer weiteren Ausführungsform weist der Schritt g1) ferner auf:
Bereitstellen, in Abhängigkeit des Anfragens oder einer weiteren Authentisierung des Geräts bei der Zugriffskontrollvorrichtung, der spezifischen Geräteattribute aufweisend zweite Zero-Trust-Attribute aufweisend jeweilige weitere bestimmte Werte.

Hierbei werden beispielsweise die zweiten Zero-Trust-Attribute erst bei einer Authentisierung des Geräts oder einem Zugriff des Geräts bei der Zugriffskontrollvorrichtung ermittelt (entspricht der obigen zweiten Stufe der Ermittlung). Ein spezifisches Geräteattribut kann auch als ein Zero-Trust-Attribut, insbesondere als ein zweites Zero-Trust-Attribut, bezeichnet werden.

Gemäß einer weiteren Ausführungsform ist die Ressource als ein Service, insbesondere als ein IoT-Service, als ein Provisioning-Server oder als ein Onboarding-Server ausgebildet.

Gemäß einem zweiten Aspekt wird ein Computerprogrammprodukt vorgeschlagen, welches Befehle umfasst, die bei der Ausführung des Programms durch einen Computer diesen veranlassen, das computer-implementierte Verfahren gemäß dem ersten Aspekt oder Ausführungsformen des ersten Aspekts auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein Kommunikationssystem zum Verarbeiten von Daten aufweisend ein Gerät, eine erste Bereitstellungseinheit, eine zweite Bereitstellungseinheit, eine Durchführungseinheit, eine Registrierungsstelle und eine Zertifizierungsstelle vorgeschlagen,
wobei das Gerät dazu eingerichtet ist, ein digitales Zertifikat für das Gerät mittels einer Zertifikatssignierungsanforderung anzufordern,
wobei die erste Bereitstellungseinheit dazu eingerichtet ist, in Abhängigkeit des Anforderns, von für das Gerät spezifischen Geräteattributen bereitzustellen,
wobei die Registrierungsstelle dazu eingerichtet ist, eine Prüfung der Zertifikatssignierungsanforderung des Geräts durchzuführen,
wobei die Registrierungsstelle dazu eingerichtet ist, die spezifischen Geräteattribute in das angeforderte digitale Zertifikat zum Erhalten eines digitalen Gerätezertifikats aufweisend die spezifischen Geräteattribute einzukodieren,
wobei die Zertifizierungsstelle dazu eingerichtet ist, wenn die Prüfung erfolgreich ist, ein Signieren des digitalen Gerätezertifikats mit dem privaten Schlüssel der Zertifizierungsstelle zum Ausstellen eines signierten digitalen Gerätezertifikats durchzuführen,
wobei die zweite Bereitstellungseinheit dazu eingerichtet ist, das ausgestellte signierte digitale Gerätezertifikat dem Gerät bereitzustellen,
wobei die Durchführungseinheit dazu eingerichtet ist, ein Zugriffsschema zum Zugriff auf eine Ressource durch das Gerät in Abhängigkeit des ausgestellten signierten digitalen Gerätezertifikats durchzuführen.

Das Kommunikationssystem ist vorzugsweise als ein Automatisierungssystem ausgebildet. Das Automatisierungssystem kann eine Automatisierungsanlage aus der Prozessindustrie, der chemischen Industrie, der pharmazeutischen Industrie, der petrochemischen Industrie oder eine Anlage aus der Lebensmittel- und Getränkeindustrie sein. Dazu gehören auch alle Anlagen aus der Fertigungs- und Produktionsindustrie und Anlagen, in denen z.B. Autos oder Waren aller Art produziert werden. Das Automatisierungssystem kann weiterhin ein Energieautomatisierungssystem, ein Energieübertragungssystem, ein Kraftwerk, ein Elektrolyseur, ein Gebäudeautomatisierungssystem oder ein Bahnautomatisierungssystem sein.

Die jeweilige Einheit, zum Beispiel die Scan-Einheit oder/und die erste Bereitstellungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das computer-implementierte Verfahren nach dem ersten Aspekt beschriebenen technischen Effekte und Vorteile gelten gleichermaßen für das Kommunikationssystem nach dem dritten Aspekt. Ferner gelten Ausführungsformen und Merkmale, die unter Bezugnahme auf das computer-implementierte Verfahren nach dem ersten Aspekt beschrieben sind, entsprechend für das Kommunikationssystem nach dem dritten Aspekt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert. Unabhängig vom grammatikalischen Geschlecht eines bestimmten Begriffes sind Personen mit männlicher, weiblicher oder anderer Geschlechteridentität mit umfasst.
- Fig. 1: zeigt ein schematisches Blockdiagramm eines Kommunikationssystems zum Verarbeiten von Daten; und
- Fig. 2: zeigt ein schematisches Flussdiagramm eines computer-implementierten Verfahrens zum Verarbeiten von Daten.

In den Figuren sind gleiche oder funktionsgleiche Elemente mit denselben Bezugszeichen versehen worden, sofern nichts anderes angegeben ist.

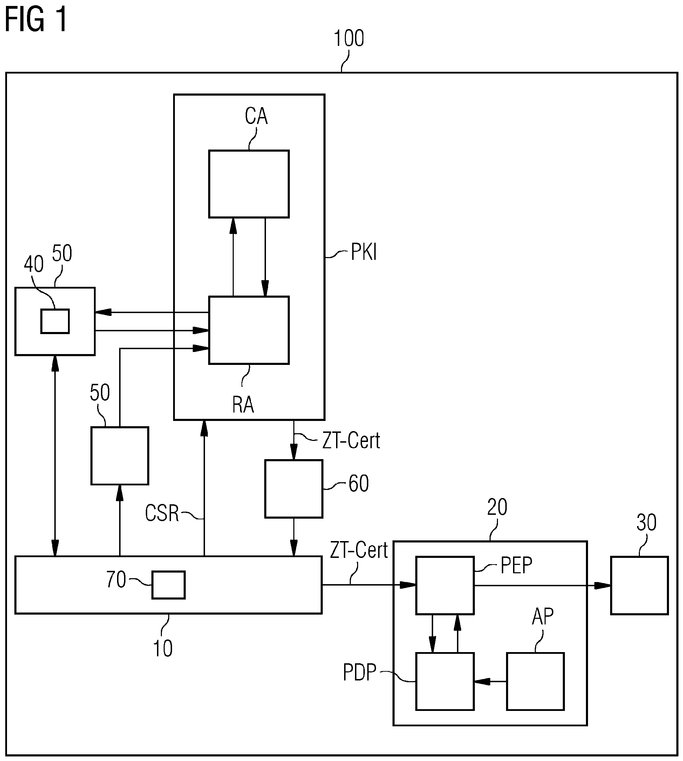

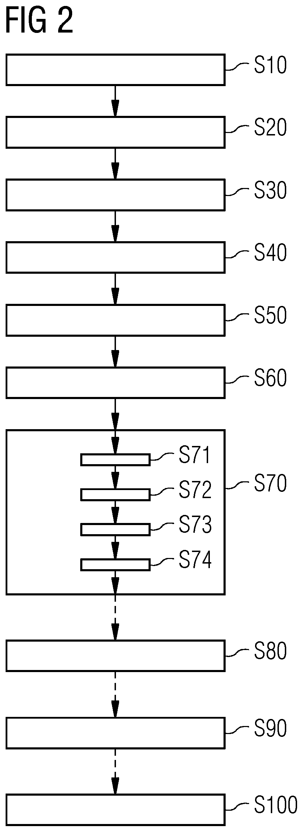

Die Fig. 1 zeigt ein schematisches Blockdiagramm eines Kommunikationssystems 100 zum Verarbeiten von Daten aufweisend ein Gerät 10, eine erste Bereitstellungseinheit 50 (ausgebildet in zwei Ausführungsformen, siehe Fig. 1), eine zweite Bereitstellungseinheit 60, eine Durchführungseinheit 70, eine Registrierungsstelle RA, eine Zertifizierungsstelle CA sowie eine Scan-Einheit 40. In Fig. 1 sind die Registrierungsstelle RA und die Zertifizierungsstelle CA in einer Public-Key-Infrastruktur PKI angeordnet. Darüber hinaus sind die Verfahrensschritte von Fig. 2, welche ein computer-implementiertes Verfahren zum Verarbeiten von Daten in einem Kommunikationssystem 100 beschreiben, in den folgenden Erläuterungen zu Fig. 1 in Klammern angegeben.

Fig. 1 zeigt ein Realisierungsbeispiel, bei dem zuerst ein signiertes digitales Gerätezertifikat ZT-Cert für das Gerät 10 ausgestellt wird. Anschließend will das Gerät 10 mittels des ausgestellten signierten digitalen Gerätezertifikats ZT-Cert auf eine Ressource 30 zugreifen. Die Ressource 30 ist in Fig. 1 als ein Service, insbesondere als ein IoT-Service, ausgebildet. In Ausführungsformen kann die Ressource 30 auch als ein Provisioning-Server oder als ein Onboarding-Server ausgebildet sein.

In Fig. 1 ist das Gerät 10 zuerst dazu eingerichtet, ein digitales Zertifikat für das Gerät 10 mittels einer Zertifikatssignierungsanforderung CSR anzufordern (siehe Schritt S10 in Fig. 2).

Anschließend ist die erste Bereitstellungseinheit 50 dazu eingerichtet, in Abhängigkeit des Anforderns, von für das Gerät spezifischen Geräteattributen bereitzustellen (siehe Schritt S20 in Fig. 2).

Bei diesem Bereitstellen ist die Scan-Einheit 40 dazu eingerichtet, einen Gerätescan zum Ermitteln der spezifischen Geräteattribute durchzuführen. Das Durchführen des Gerätescan weist einen Netzwerk-Scan des Geräts, eine Abfrage der spezifischen Geräteattribute über eine Open Platform Communications Unified Architecture oder ein Simple Network Management Protocol und/oder eine Abfrage von einem Gerätemanagementsystem, in welchem die spezifischen Geräteattribute für das Gerät 10 gespeichert sind, auf (siehe Fig. 1, die Anordnung der Scan-Einheit 40 innerhalb der ersten Bereitstellungseinheit 50) .

Alternativ kann das Bereitstellen auch ohne die Scan-Einheit 40 erfolgen. Hierbei ist die erste Bereitstellungseinheit 50 bei dem Bereitstellen der spezifischen Geräteattribute dazu eingerichtet, in Abhängigkeit des Anforderns und gemeinsam mit der Zertifikatssignierungsanforderung CSR die spezifischen Geräteattribute zumindest an die Registrierungsstelle RA zu übermitteln (siehe Fig. 1, die Pfeile von dem Gerät 10 über die erste Bereitstellungs-Einheit 50 zu der Registrierungsstelle RA).

Die spezifischen Geräteattribute weisen erste Informationen, die angeben, ob eine Gerätekonfigurations-Compliance-Prüfung beim Ausstellen des signierten digitalen Gerätezertifikats gemäß Schritt S50 (siehe Fig. 2) erfolgt ist, zweite Informationen, die angeben, welche spezifischen Geräteattribute beim Ausstellen des signierten digitalen Gerätezertifikats gemäß Schritt S50 überprüft wurden, und/oder dritte Informationen auf, die Information zu ermittelten Attributwerten der spezifischen Geräteattribute angeben.

Nun ist die Registrierungsstelle RA in Fig. 1 dazu eingerichtet, eine Prüfung der Zertifikatssignierungsanforderung CSR des Geräts 10 durchzuführen (siehe Schritt S30 in Fig. 2).

Darauf folgend ist die Registrierungsstelle RA dazu eingerichtet, die spezifischen Geräteattribute in das angeforderte digitale Zertifikat zum Erhalten eines digitalen Gerätezertifikats aufweisend die spezifischen Geräteattribute einzukodieren (siehe Schritt S40 in Fig. 2).

Dann ist die Zertifizierungsstelle ZA dazu eingerichtet, wenn die Prüfung erfolgreich ist und wenn weiterhin die spezifischen Geräteattribute in das zu signierende digitale Gerätezertifikat einkodiert sind, ein Signieren des digitalen Gerätezertifikats mit dem privaten Schlüssel der Zertifizierungsstelle CA zum Ausstellen eines signierten digitalen Gerätezertifikats ZT-Cert durchzuführen (siehe Schritt S50 in Fig. 2) .

Ferner weisen die spezifischen Geräteattribute erste Zero-Trust-Attribute auf (nicht dargestellt). Bei dem Durchführen gemäß Schritt S50 ist die Registrierungsstelle RA hierbei dazu eingerichtet, eine Zulässigkeit eines bestimmten Werts eines der ersten Zero-Trust-Attribute zu überprüfen.

Anschließend ist die zweite Bereitstellungseinheit 60 dazu eingerichtet, das ausgestellte signierte digitale Gerätezertifikat ZT-Cert dem Gerät 10 bereitzustellen (siehe Schritt S60 in Fig. 2). Das ausgestellte signierte digitale Gerätezertifikat ZT-Cert in Fig. 1 weist eine bestimmte Gültigkeitsdauer von einem Tag auf. In Ausführungsformen beträgt die bestimmte Gültigkeitsdauer mehrere Tage oder eine Woche.

In Fig. 1 weist das ausgestellte signierte digitale Gerätezertifikat ZT-Cert eine Zertifikatserweiterung auf. Die Zertifikatserweiterung weist in einem ersten Erweiterungsfeld einen Verweis auf zumindest ein Attribut-Zertifikat, in welchem zusätzliche für das Gerät 10 spezifische Geräteattribute gesichert gespeichert sind, auf. In Ausführungsformen weist das ausgestellte signierte digitale Gerätezertifikat ZT-Cert eine weitere Zertifikatserweiterung auf. Diese weitere Zertifikatserweiterung weist in einem zweiten Erweiterungsfeld eine Root-of-Trust für zumindest ein weiteres Attribut-Zertifikat auf, wobei die Root-of-Trust den öffentlichen Schlüssel der Zertifizierungsstelle ZA aufweist (nicht dargestellt) .

Daraufhin ist die Durchführungseinheit 70 dazu eingerichtet, ein Zugriffsschema zum Zugriff auf eine Ressource 30 durch das Gerät 10 in Abhängigkeit des ausgestellten signierten digitalen Gerätezertifikats ZT-Cert durchzuführen (siehe Schritt S70 in Fig. 2).

Um die Erlaubnis eines Zugriffs von dem Gerät 10 auf die Ressource 30 mittels des Durchführens des Zugriffsschemas zu prüfen, weist das Kommunikationssystem 100 der Fig. 1 ferner eine Zugriffskontrollvorrichtung 20 aufweisend einen Sicherheitsregelentscheidungspunkt PDP und einen Sicherheitsregelumsetzungspunkt PEP auf.

Das Durchführen des Zugriffsschemas anhand der Durchführungseinheit 70 (siehe Fig. 2, Schritt S70) weist ferner die nachfolgenden Schritte auf:
Zuerst ist das Gerät 10 dazu eingerichtet, eine Erlaubnis zum Zugriff von dem Gerät 10 auf die Ressource 30 anzufragen (siehe Schritt S71 in Fig. 2). Weiterhin können auch in Abhängigkeit des Anfragens oder einer weiteren Authentisierung des Geräts 10 bei der Zugriffskontrollvorrichtung 20 die spezifischen Geräteattribute aufweisend zweite Zero-Trust-Attribute aufweisend jeweilige weitere bestimmte Werte bereitgestellt werden (siehe auch Schritt S71 in Fig. 2).

Dann ist der Sicherheitsregelentscheidungspunkt PDP dazu eingerichtet, die Erlaubnis durch Anwenden von vordefinierten Zugriffsregeln AP auf die spezifischen Geräteattribute des ausgestellten signierten digitalen Gerätezertifikats ZT-Cert zum Erhalten eines ersten Zugriffsergebnisses zu überprüfen (siehe Schritt S72 in Fig. 2). Mit anderen Worten prüft der Sicherheitsregelentscheidungspunkt PDP die spezifischen Geräteattribute. In Ausführungsformen ist der Sicherheitsregelentscheidungspunkt PDP dazu eingerichtet, weitere für die Erlaubnis zum Zugriff erforderliche spezifische Geräteattribute (Zero-Trust-Attribute) zu ermitteln.

Wenn das erste Zugriffsergebnis positiv ist, ist der Sicherheitsregelumsetzungspunkt PEP dazu eingerichtet, den Zugriff von dem Gerät 10 auf die Ressource 30 zuzulassen (siehe Schritt S73 in Fig. 2). Wenn das erste Zugriffsergebnis negativ ist, ist der Sicherheitsregelumsetzungspunkt PEP dazu eingerichtet, den Zugriff von dem Gerät 10 auf die Ressource 30 zu verhindern (siehe Schritt S74 in Fig. 2).

Weiterhin kann der Sicherheitsregelentscheidungspunkt PDP nach dem Überprüfen gemäß Schritt S72 zu weiteren Aktionen eingerichtet sein.

Beispielsweise ist dann der Sicherheitsregelentscheidungspunkt PDP bei einem sicherheitskritischen Zugriff durch das Gerät 10 auf die Ressource 30 oder bei einer Authentisierung des Geräts 10 bei der Zugriffskontrollvorrichtung 20 dazu eingerichtet, die Erlaubnis zum Zugriff auf die Ressource 30 durch das Gerät 10 durch Anwenden der vordefinierten Zugriffsregeln AP auf die spezifischen Geräteattribute des ausgestellten signierten digitalen Gerätezertifikats zum Erhalten eines zweiten Zugriffsergebnisses erneut zu überprüfen (siehe Schritt S80 in Fig. 2).

Anschließend ist die erste Bereitstellungs-Einheit 50 dazu eingerichtet, bei einem sicherheitskritischen Zugriff durch das Gerät 10 auf die Ressource 30 oder bei einer Authentisierung des Geräts 10 bei der Zugriffskontrollvorrichtung 20, die bereitgestellten spezifischen Geräteattribute erneut bereitzustellen (siehe Schritt S90 in Fig. 2).

Ferner ist der Sicherheitsregelentscheidungspunkt PDP dann bei dem sicherheitskritischen Zugriff durch das Gerät 10 auf die Ressource 30 oder bei der Authentisierung des Geräts 10 bei der Zugriffskontrollvorrichtung 20 dazu eingerichtet, die Erlaubnis zum Zugriff auf die Ressource 30 durch das Gerät 10 durch den Sicherheitsregelentscheidungspunkt PDP durch Anwenden der vordefinierten Zugriffsregeln AP auf die erneut bereitgestellten spezifischen Geräteattribute des ausgestellten signierten digitalen Gerätezertifikats zum Erhalten eines dritten Zugriffsergebnisses erneut zu überprüfen (siehe Schritt S100 in Fig. 2).

Fig. 2 zeigt ein schematisches Flussdiagramm eines computer-implementierten Verfahrens zum Verarbeiten von Daten in einem Kommunikationssystem 100 nach Fig. 1, welches ein Gerät 10, eine Registrierungsstelle RA und eine Zertifizierungsstelle CA (siehe Fig. 1) aufweist.

Die jeweiligen Verfahrensschritte S10 - S70 des computer-implementierten Verfahrens wurden bereits oben in Bezug auf Fig. 1 erläutert, weshalb zur Vermeidung von Wiederholungen die Verfahrensschritte S10 - S70 nicht nochmals erläutert werden. Dies gilt auch für die Verfahrensschritte S80 - S100, welche Ausführungsformen der Verfahrensschritte S10 - S70 des computerimplementierten Verfahrens sind und somit mit den Verfahrensschritten S10 - S70 in Fig. 2 über entsprechende gestrichelte Linien verbunden sind, die an einem Ende einen Pfeil aufweisen. Auch werden in Fig. 2 die Verfahrensschritte S71 - S74 ebenso nicht mehr beschrieben, welche Ausführungsformen des Verfahrensschritts S70 sind, da die Verfahrensschritte S71 - S74 bereits in Fig. 1 erläutert wurden.

Obwohl die vorliegende Erfindung anhand von Ausführungsbeispielen beschrieben wurde, ist sie vielfältig modifizierbar.

### Quellenverzeichnis:

[1] https://nvlpubs.nist.gov/nistpubs/SpecialPublications/ NIST.SP.800-207.pdf
[2] Rainer Falk, Steffen Fries, Chai Bisale: "Role-based Access Control in the Digital Grid - A Review of Requirements and Discussion of Solution Approaches", International Journal on Advances in Security, vol 10 no 3 & 4, year 2017, https://www.thinkmind.org/articles/sec_v10_n34_2017_8.pd f
[3] https://en.wikipedia.org/wiki/Authorization_certificate

## Patentansprüche

1. Computer-implementiertes Verfahren zum Verarbeiten von Daten in einem Kommunikationssystem (100), welches ein Gerät (10), eine Registrierungsstelle (RA) und eine Zertifizierungsstelle (CA) aufweist, mit den Schritten:
a) Anfordern (S10) eines digitalen Zertifikats für das Gerät (10) mittels einer Zertifikatssignierungsanforderung (CSR),
b) Bereitstellen (S20), in Abhängigkeit des Anforderns, von für das Gerät spezifischen Geräteattributen,
c) Durchführen (S30), durch die Registrierungsstelle (RA), einer Prüfung der Zertifikatssignierungsanforderung (CSR) des Geräts (10),
d) Einkodieren (S40), durch die Registrierungsstelle (RA), der spezifischen Geräteattribute in das angeforderte digitale Zertifikat zum Erhalten eines digitalen Gerätezertifikats aufweisend die spezifischen Geräteattribute,
e) Durchführen (S50), wenn die Prüfung erfolgreich ist, durch die Zertifizierungsstelle (CA), eines Signierens des digitalen Gerätezertifikats mit dem privaten Schlüssel der Zertifizierungsstelle (CA) zum Ausstellen eines signierten digitalen Gerätezertifikats (ZT-Cert),
f) Bereitstellen (S60) des ausgestellten signierten digitalen Gerätezertifikats (ZT-Cert) an das Gerät (10), und
g) Durchführen (S70) eines Zugriffsschemas zum Zugriff auf eine Ressource (30) durch das Gerät (10) in Abhängigkeit des ausgestellten signierten digitalen Gerätezertifikats (ZT-Cert) .

2. Verfahren nach Anspruch 1,
**dadurch gekennzeichnet,**
**dass** das Bereitstellen gemäß Schritt b) (S20) ferner aufweist:
Durchführen eines Gerätescans mittels einer Scan-Einheit (40) zum Ermitteln der spezifischen Geräteattribute.

3. Verfahren nach Anspruch 2,
**dadurch gekennzeichnet,**
**dass** das Durchführen des Gerätescans einen Netzwerk-Scan des Geräts, eine Abfrage der spezifischen Geräteattribute über eine Open Platform Communications Unified Architecture oder ein Simple Network Management Protocol und/oder eine Abfrage von einem Gerätemanagementsystem, in welchem die spezifischen Geräteattribute für das Gerät (10) gespeichert sind, aufweist.

4. Verfahren nach Anspruch 1,
**dadurch gekennzeichnet,**
**dass** das Bereitstellen gemäß Schritt b) (S20) aufweist:
Übermitteln, in Abhängigkeit des Anforderns und gemeinsam mit der Zertifikatssignierungsanforderung (CSR), der spezifischen Geräteattribute zumindest an die Registrierungsstelle (RA) .

5. Verfahren nach einem der Ansprüche 1 - 4,
**dadurch gekennzeichnet,**
**dass** die spezifischen Geräteattribute erste Zero-Trust-Attribute aufweisen, wobei das Durchführen gemäß Schritt e) (S50) ferner aufweist:
Überprüfen, durch die Registrierungsstelle (RA), einer Zulässigkeit eines bestimmten Werts eines der ersten Zero-Trust-Attribute.

6. Verfahren nach einem der Ansprüche 1 - 5,
**dadurch gekennzeichnet,**
**dass** die spezifischen Geräteattribute erste Informationen, die angeben, ob eine Gerätekonfigurations-Compliance-Prüfung beim Ausstellen des signierten digitalen Gerätezertifikats gemäß Schritt e) (S50) erfolgt ist, zweite Informationen, die angeben, welche spezifischen Geräteattribute beim Ausstellen des signierten digitalen Gerätezertifikats gemäß Schritt e) (S50) überprüft wurden, und/oder dritte Informationen aufweisen, die Information zu ermittelten Attributwerten der spezifischen Geräteattribute angeben.

7. Verfahren nach einem der Ansprüche 1 - 6,
**dadurch gekennzeichnet,**
**dass** das ausgestellte signierte digitale Gerätezertifikat (ZT-Cert) eine bestimmte Gültigkeitsdauer, vorzugsweise von einem Tag, mehreren Tagen oder einer Woche, aufweist.

8. Verfahren nach einem der Ansprüche 1 - 7,
**dadurch gekennzeichnet,**
**dass** das ausgestellte signierte digitale Gerätezertifikat (ZT-Cert) eine Zertifikatserweiterung aufweist, wobei die Zertifikatserweiterung in einem ersten Erweiterungsfeld einen Verweis auf zumindest ein Attribut-Zertifikat, in welchem zusätzliche für das Gerät (10) spezifische Geräteattribute gesichert gespeichert sind, aufweist.

9. Verfahren nach einem der Ansprüche 1 - 8,
**dadurch gekennzeichnet,**
**dass** das ausgestellte signierte digitale Gerätezertifikat (ZT-Cert) eine weitere Zertifikatserweiterung aufweist, wobei die weitere Zertifikatserweiterung in einem zweiten Erweiterungsfeld eine Root-of-Trust für zumindest ein weiteres Attribut-Zertifikat aufweist, wobei die Root-of-Trust den öffentlichen Schlüssel der Zertifizierungsstelle (ZA) aufweist.

10. Verfahren nach einem der Ansprüche 1 - 9,
**dadurch gekennzeichnet,**
**dass** das Kommunikationssystem (100) ferner eine Zugriffskontrollvorrichtung (20) aufweisend einen Sicherheitsregelentscheidungspunkt (PDP) und einen Sicherheitsregelumsetzungspunkt (PEP) aufweist, wobei das Durchführen des Zugriffsschemas gemäß Schritt g) (S70) ferner die Schritte aufweist:
g1) Anfragen (S71), durch das Gerät (10), einer Erlaubnis zum Zugriff auf die Ressource (30) durch das Gerät (10),
g2) Überprüfen (S72) der Erlaubnis durch den Sicherheitsregelentscheidungspunkt (PDP) durch Anwenden von vordefinierten Zugriffsregeln (AP) auf die spezifischen Geräteattribute des ausgestellten signierten digitalen Gerätezertifikats (ZT-Cert) zum Erhalten eines ersten Zugriffsergebnisses,
g3) wenn das erste Zugriffsergebnis positiv ist, Zulassen (S73) des Zugriffs von dem Gerät (10) auf die Ressource (30) durch den Sicherheitsregelumsetzungspunkt (PEP), oder
wenn das erste Zugriffsergebnis negativ ist, Verhindern (S74) des Zugriffs von dem Gerät (10) auf die Ressource (30) durch den Sicherheitsregelumsetzungspunkt (PEP).

11. Verfahren nach Anspruch 10,
**dadurch gekennzeichnet,**
**dass** nach dem Überprüfen gemäß Schritt g2) (S72) das Verfahren ferner die Schritte aufweist:
h) erneutes Überprüfen (S80), bei einem sicherheitskritischen Zugriff durch das Gerät (10) auf die Ressource (30) oder bei einer Authentisierung des Geräts (10) bei der Zugriffskontrollvorrichtung (20), der Erlaubnis zum Zugriff auf die Ressource (30) durch das Gerät (10) durch den Sicherheitsregelentscheidungspunkt (PDP) durch Anwenden der vordefinierten Zugriffsregeln (AP) auf die spezifischen Geräteattribute des ausgestellten signierten digitalen Gerätezertifikats zum Erhalten eines zweiten Zugriffsergebnisses,
i) erneutes Bereitstellen (S90), bei einem sicherheitskritischen Zugriff durch das Gerät (10) auf die Ressource (30) oder bei einer Authentisierung des Geräts (10) bei der Zugriffskontrollvorrichtung (20), der bereitgestellten spezifischen Geräteattribute, und/oder
j) erneutes Überprüfen (S100), bei dem sicherheitskritischen Zugriff durch das Gerät (10) auf die Ressource (30) oder bei der Authentisierung des Geräts (10) bei der Zugriffskontrollvorrichtung (20), der Erlaubnis zum Zugriff auf die Ressource (30) durch das Gerät (10) durch den Sicherheitsregelentscheidungspunkt (PDP) durch Anwenden der vordefinierten Zugriffsregeln (AP) auf die erneut bereitgestellten spezifischen Geräteattribute des ausgestellten signierten digitalen Gerätezertifikats zum Erhalten eines dritten Zugriffsergebnisses.

12. Verfahren nach Anspruch 10 oder 11,
**dadurch gekennzeichnet,**
**dass** der Schritt g1) (S71) ferner aufweist:
Bereitstellen, in Abhängigkeit des Anfragens oder einer weiteren Authentisierung des Geräts (10) bei der Zugriffskontrollvorrichtung (20), der spezifischen Geräteattribute aufweisend zweite Zero-Trust-Attribute aufweisend jeweilige weitere bestimmte Werte.

13. Verfahren nach einem der Ansprüche 1 - 12,
**dadurch gekennzeichnet,**
**dass** die Ressource (30) als ein Service, insbesondere als ein IoT-Service, als ein Provisioning-Server oder als ein Onboarding-Server ausgebildet ist.

14. Computerprogrammprodukt, umfassend Befehle, die bei der Ausführung des Programms durch einen Computer diesen veranlassen, das Verfahren nach einem der Ansprüche 1 - 13 auszuführen.

15. Kommunikationssystem (100) zum Verarbeiten von Daten aufweisend ein Gerät (10), eine erste Bereitstellungseinheit (50), eine zweite Bereitstellungseinheit (60), eine Durchführungseinheit (70), eine Registrierungsstelle (RA) und eine Zertifizierungsstelle (CA),
wobei das Gerät (10) dazu eingerichtet ist, ein digitales Zertifikat für das Gerät (10) mittels einer Zertifikatssignierungsanforderung (CSR) anzufordern,
wobei die erste Bereitstellungseinheit (50) dazu eingerichtet ist, in Abhängigkeit des Anforderns, von für das Gerät spezifischen Geräteattributen bereitzustellen,
wobei die Registrierungsstelle (RA) dazu eingerichtet ist, eine Prüfung der Zertifikatssignierungsanforderung (CSR) des Geräts (10) durchzuführen,
wobei die Registrierungsstelle (RA) dazu eingerichtet ist, die spezifischen Geräteattribute in das angeforderte digitale Zertifikat zum Erhalten eines digitalen Gerätezertifikats aufweisend die spezifischen Geräteattribute einzukodieren,
wobei die Zertifizierungsstelle (ZA) dazu eingerichtet ist, wenn die Prüfung erfolgreich ist, ein Signieren des digitalen Gerätezertifikats mit dem privaten Schlüssel der Zertifizierungsstelle (CA) zum Ausstellen eines signierten digitalen Gerätezertifikats (ZT-Cert) durchzuführen,
wobei die zweite Bereitstellungseinheit (60) dazu eingerichtet ist, das ausgestellte signierte digitale Gerätezertifikat (ZT-Cert) dem Gerät (10) bereitzustellen,
wobei die Durchführungseinheit (70) dazu eingerichtet ist, ein Zugriffsschema zum Zugriff auf eine Ressource (30) durch das Gerät (10) in Abhängigkeit des ausgestellten signierten digitalen Gerätezertifikats (ZT-Cert) durchzuführen.
